# FASCICULE DE BREVET EUROPEEN

(11) **EP 0 489 653 B1**
(45) Date de publication et mention de la délivrance du brevet: **20.07.1994**
(21) Numéro de dépôt: 91403278.4
(22) Date de dépôt: 04.12.1991
(51) Int. Cl.: F02K 1/80, F02C 7/28, F01D 11/00

(54) **Joint d'étanchéité entre l'arrière du fuselage d'un avion et les volets extérieurs de son turboréacteur**
Dichtung zwischen Flugzeugrumpf und Segmenten von einem Strahltriebinerschubdüse
Seal joint between fuselage and segments of jet engine exhaust nozzle

(30) Priorité: 05.12.1990 FR 9015193
(43) Date de publication de la demande: 10.06.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Glowacki, Pierre Antoine, F-77770 Fontaine le Port (FR)

(56) Documents cités:
- DE-A- 1 751 550
- FR-A- 2 244 945
- US-A- 4 114 248

## Description

### DOMAINE DE L'INVENTION

L'invention concerne les avions à propulsion par réaction, et en particulier un certain type d'avions militaires pour lesquels le moteur est incorporé directement dans le fuselage de l'avion. Dans ce type d'avions, la tuyère arrière du moteur, c'est-à-dire du turboréacteur, est dans le prolongement direct du fuselage de l'avion.

### ART ANTERIEUR

Dans ce type d'avions, il est nécessaire d'assurer l'étanchéité entre l'extrémité arrière du fuselage.

Le document US-A- 4114248 divulgue un joint d'étanchéité entre une tuyère d'un turboréacteur et les volets.

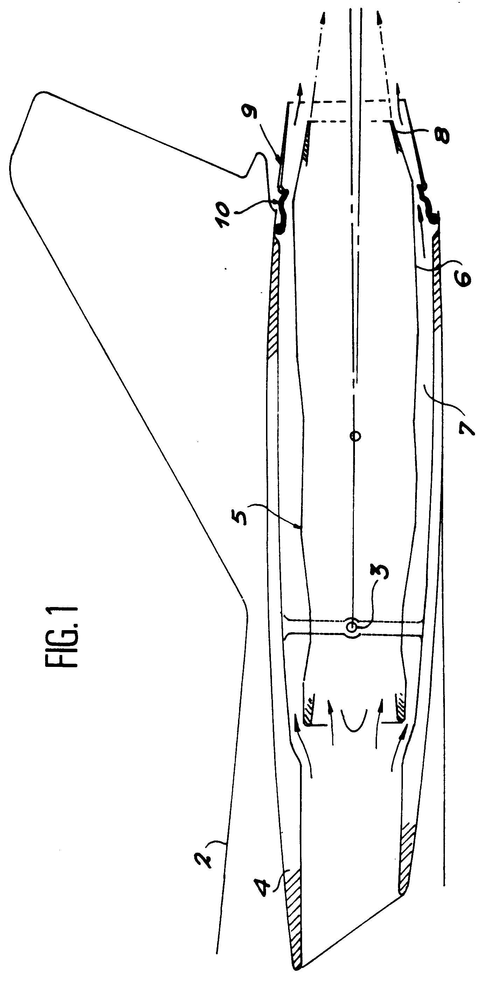

La figure 1 montre un turboréacteur 5 placé à l'arrière d'un avion de chasse 2 pour assurer la propulsion de celui-ci par réaction. On constate qu'il est placé dans un logement 4. Les moyens de fixation du turboréacteur 5 dans ce logement 4 sont constitués principalement à l'avant d'un point de pivotement 3 du turboréacteur autour d'un axe horizontal. Lors du fonctionnement du turboréacteur 5, les parois de ce dernier, ainsi que celles des équipements fixés à la périphérie de celui-ci peuvent atteindre des températures comprises entre 250 et 350°C dans le cas d'un turboréacteur pour avions militaires. Il est donc nécessaire de protéger la cellule avion, placée à l'avant de l'avion, de ces élévations de température. A cet effet, de l'air froid est prélevé au niveau de la manche d'entrée de l'avion et est amené à l'entrée du logement 4 pour évacuer les calories dégagées lors du fonctionnement du turboréacteur 5. Le courant d'air ainsi créé passe à l'intérieur du logement 4 dans un couloir tubulaire 7 ménagé entre le logement 4 et le turboréacteur 5, et ressort à l'extérieur de l'avion au niveau de la tuyère constituant l'extrémité arrière de l'avion.

Ce refroidissement du compartiment moteur se fait donc par un débit équivalant à deux pour cent du débit du moteur lui-même. Bien que ce débit de refroidissement soit faible, son évacuation incorrecte peut grandement perturber le fonctionnement de la tuyère de sortie et le comportement aérodynamique de l'avion par son arrière. A cet effet, l'air de refroidissement est rejeté au niveau de la tuyère entre des volets intérieurs 8 et des volets extérieurs 9. Les volets intérieurs 8 sont placés dans le prolongement de la partie arrière du corps du turboréacteur 5, c'est-à-dire le canal de post-combustion 6. Les volets extérieurs 9 sont placés dans le prolongement du logement 4 dans lequel est placé le turboréacteur 5, c'est-à-dire dans le prolongement du fuselage de l'avion. Les volets intérieurs 8 sont donc en contact avec les gaz de propulsion élevés à haute température et sont appelés pour cette raison : "volets chauds". Les volets extérieurs 9 sont placés à l'extérieur du courant d'air de refroidissement issus de l'espace 7 et sont appelés pour cette raison : "volets froids". L'air de refroidissement sort donc de l'espace 7 entre les volets intérieurs 8 et les volets extérieurs 9, participant du même coup à une protection thermique de l'entourage de l'arrière de l'avion.

Il est en outre nécessaire d'assurer l'étanchéité entre l'extrémité arrière du fuselage et les volets extérieurs 9 qui sont montés pivotants autour d'axes fixes par rapport au turboréacteur 9. Cette étanchéité est nécessaire entre autres pour protéger la cellule avion d'éventuelles remontées de gaz de combustion en amont de la tuyère. D'autre part, les joints utilisés à cet effet doivent être souples, car des déplacements radiaux et axiaux du turboréacteur 5 se produisent par rapport au fuselage de l'avion. Il peut en effet apparaître des déplacements axiaux de l'ordre de 20 mm à ce niveau, dus aux différences de température et de matériaux utilisés. Les déplacements radiaux peuvent être de l'ordre de 10 mm et apparaissent notamment lors de manoeuvres telles que des virages serrés ou des appontages. On note en outre que les volets extérieurs 9 peuvent avoir un débattement de 10°.

Sur la figure 1, un joint a été représenté en trait épais entre le fuselage et les volets extérieurs. Ce joint symbolise aussi bien les joints utilisés dans l'art antérieur que celui qui fait l'objet de l'invention. Cette symbolisation n'a comme but que de localiser l'emplacement de ce joint dans un avion militaire.

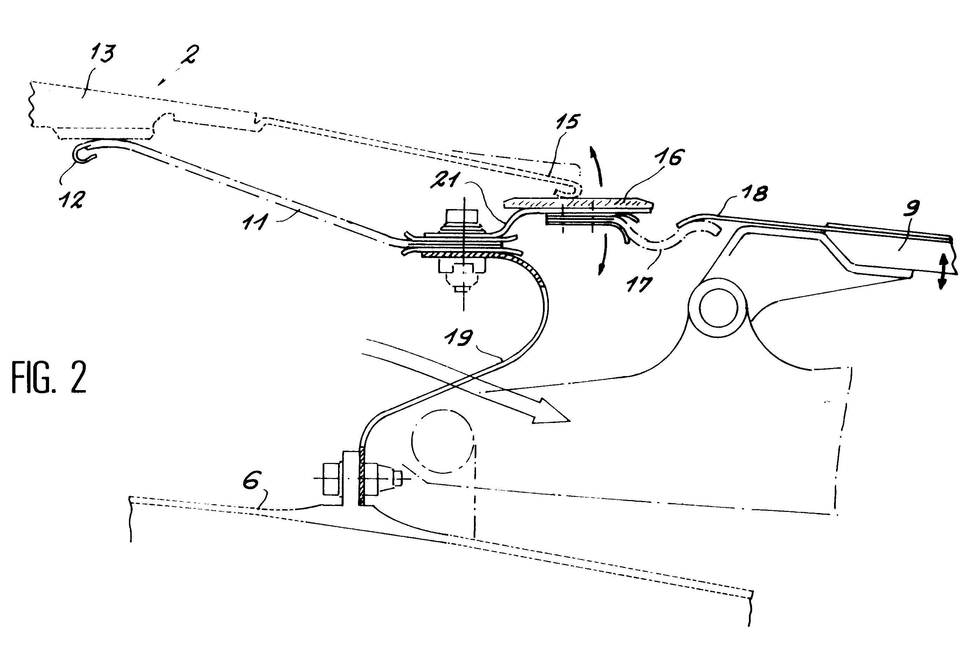

En référence à la figure 2, un joint de l'art antérieur est constitué des principales parties suivantes.

La partie avant du joint est une partie métallique souple constituée d'un anneau support 11 dont les extrémités avant 12 constituent une cloison souple bombée, mise en contact avec un patin de glissement 13 fixé au fuselage de l'avion 2. Cette partie avant est de préférence constituée de lamelles de titane souple rivetées sur des pattes de support 19, elles-mêmes fixées chacune à la périphérie du canal de post-combustion 6 du turboréacteur 5. L'extrémité 12 de cette première partie est de préférence en téflon pour favoriser le glissement axial du joint.

Une deuxième partie médiane 21 du joint est métallique et est placée en aval des pattes de support 19. Cette partie médiane 21 porte des patins 16, de préférence en téflon, assurant le contact avec l'extrémité arrière 15 du fuselage de l'avion 2, permettant ainsi le glissement axial de l'ensemble du turboréacteur 5 par rapport à la paroi interne du fuselage de l'avion 2.

La partie arrière du joint est constituée d'une partie métallique 17 fendue par des fentes longitudinales, chaque partie fendue étant en contact avec la base d'un volet extérieur 9.

Le fait que ce joint se compose de plusieurs partie fendues ou elles-mêmes composées de différentes parties flexibles permet de rattraper les déplacements radiaux par déformation de ces différentes pièces du joint.

Le nombre de pièces constituant un tel joint avoisine 250 et comprend des anneaux, des lamelles, des vis, des rivets, dont un grand nombre de ces pièces est en titane, et des patins en téflon. Le montage d'un tel joint est donc complexe et son prix de revient est trop coûteux. D'autre part, le grand nombre de pièces lui procure une masse non négligeable.

L'invention vise à remédier à ces inconvénients.

### RESUME DE L'INVENTION

A cet effet, l'objet principal de l'invention est un joint d'étanchéité entre l'extrémité arrière du fuselage d'un avion et les volets extérieurs de la tuyère d'un turboréacteur de l'avion. Le joint est fixé au turboréacteur au moyen de pattes supports fixées elles-mêmes sur la surface externe du canal de post-combustion du turboréacteur et a deux endroits de contact différents avec la surface interne de l'arrière du fuselage, dont un premier à l'extrémité avant du joint et un troisième point de contact avec les volets extérieurs à l'extrémité arrière.

Selon l'invention, il est constitué de :
- un anneau support sur lequel sont fixées les pattes de support ;
- un joint avant, creux, placé à l'extrémité avant du joint et assurant à l'avant le premier contact avec la surface interne du fuselage ; et
- un joint arrière creux, placé à l'extrémité arrière du joint et assurant le troisième contact avec les volets extérieurs.

Le deuxième contact avec le fuselage est assuré par un simple frottement de l'anneau support sur la surface interne du fuselage.

Pour doter un tel joint de propriétés élastiques satisfaisantes, le joint selon l'invention est de préférence en matériau composite et est sensiblement cylindrique.

Cet anneau support est d'autant plus efficace que le matériau composite utilisé est un carbone époxy ou un matériau du type carbone-bis-maléimides.

Selon un aspect de l'invention, le joint avant est prévu en silicone, est gonflable et rétractable.

Le joint arrière est de préférence un joint à lèvres ou un joint gonflable extra-plat.

De manière à pouvoir s'adapter à chaque volet extérieur, le joint arrière est coupé en un même nombre N de parties égal au même nombre N de volets extérieurs, chaque partie coupée étant en contact avec un volet extérieur.

La réalisation préférentielle de l'invention est décrite plus en détail dans la description qui suit.

### LISTE DES FIGURES

L'art antérieur décrit précédemment est accompagné de deux figures qui représentent respectivement :
- figure 1, un schéma relatif à l'emplacement du joint dans un avion militaire ; et
- figure 2, une réalisation détaillée d'un joint de l'art antérieur.

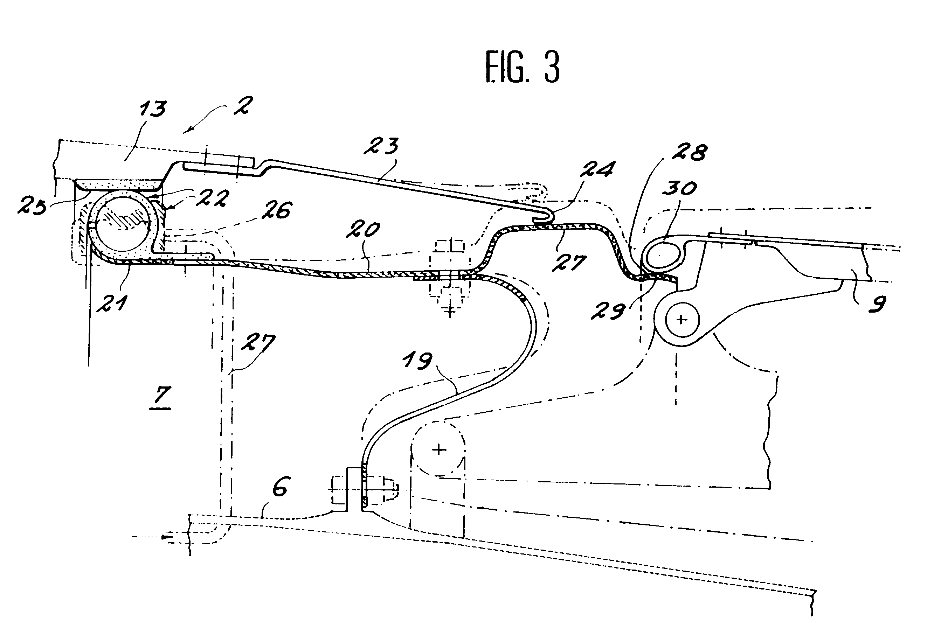

La description de la réalisation préférentielle de l'invention est accompagnée de la figure 3, représentant le joint selon l'invention.

### DESCRIPTION DETAILLEE D'UNE REALISATION DU JOINT SELON L'INVENTION

La figure 3 représente le joint selon l'invention dans la même position, et adapté aux mêmes éléments que le joint de l'art antérieur représenté à la figure 2. Ce joint assure donc également l'étanchéité entre l'extrémité arrière du fuselage de l'avion 13 prolongé par des lamelles de raccordement, et les volets extérieurs 9 fixés au turboréacteur de l'avion.

Le joint selon l'invention est composé principalement d'un anneau support 20, d'un joint avant 22 et d'un joint arrière 30.

L'anneau support 20 est fixé en son centre sur les pattes support 19 supportant déjà le joint de l'art antérieur décrit précédemment. Pour assurer une flexibilité suffisante au joint, cet anneau support 20 est de préférence en matériau composite. En fonction de la température ambiante, le carbone époxy ou un matériau du type carbone-bis-maléimides peuvent être choisis pour réaliser cet anneau support 20. Pour assurer la rigidité de l'ensemble du joint, la forme de l'anneau support est sensiblement cylindrique, son axe de révolution étant l'axe du turboréacteur.

Le joint avant 22 est placé à l'extrémité avant 21 de l'anneau support 20 où il y est fixé par exemple par collage. Ce joint avant 22 est creux et sa forme s'apparente de préférence à celle d'une note de musique, la barre de cette note étant collée contre l'extrémité avant 21 de l'anneau support 20. La réalisation d'un tel joint peut se faire en silicone armé d'un tissu métallique. Le diamètre de ce joint avant 22 est choisi de manière à ce que ce joint avant 22 s'écrase contre la face interne du fuselage, dans la limite des déplacements radiaux prévus du turboréacteur par rapport au fuselage de l'avion 2. Il peut également glisser axialement sur le patin de glissement 13 à l'intérieur du fuselage de l'avion 2 qui est de préférence constitué d'une couronne en téflon 25.

La représentation en traits mixtes du joint 22 est une variante de réalisation qui prévoit ce joint avant 22 gonflable et donc rétractable. Un tel joint peut se trouver dans le commerce sous la dénomination "Joint gonflable à grand développement" de la Société DUNLOP. Il comporte au moins un orifice 26 d'arrivée d'air sur lequel est fixée une tuyauterie souple 27 reliée à une enceinte où règne une pression supérieure à la pression régnant dans l'espace 7 entre le fuselage de l'avion 2 et le canal post-combustion 6. Plus précisément, ce prélèvement peut être effectué entre la chemise de protection thermique et le canal post-combustion du turboréacteur.

Lorsque le turboréacteur est coupé, la pression atmosphérique règne dans l'espace 7 entre le fuselage de l'avion 2 et le turboréacteur et le joint avant 22 reprend une forme initiale qui peut être celle représentée en traits mixtes sur cette figure 3. Le joint avant 22 n'est plus alors en contact avec la couronne de téflon 25 du patin de glissement 13 et le démontage de l'ensemble du joint selon l'invention s'en trouve facilité.

Le joint d'étanchéité selon l'invention comprend également un deuxième joint creux 30 se trouvant à l'arrière de l'ensemble du joint. Il assure l'étanchéité entre l'anneau support 20 du joint et les volets extérieurs 9. Ce joint arrière 30 peut être soit fixé sur l'anneau support 20, soit, comme le représente la figure 3, être fixé sur les volets extérieurs 9. Dans ce cas, il peut être collé après être positionné sur les volets extérieurs 9. Comme le joint avant 22, le joint arrière 30 est un joint annulaire, mais est par contre coupé en un nombre N de segments égal au nombre N de volets extérieurs 9. Chaque segment est en contact avec un volet extérieur 9. L'ensemble de ce joint arrière 30 peut être un simple joint à lèvres, mais peut également être constitué d'un joint gonflable, de préférence extra-plat. L'extrémité arrière 29 de l'anneau support 20 est en contact avec ce joint arrière 30 par la surface externe 28 de l'anneau support 20.

Cette même surface externe 28 assure le deuxième contact avec la surface interne du fuselage de l'avion 2 entre les joints avant 22 et arrière 30, de préférence entre le joint arrière 30 et le point de fixation des pattes support 19 symbolisées par l'axe de fixation 32. A cet endroit, l'anneau support 20 présente un bossage annulaire 27 pour que sa surface externe 28 vienne toucher l'extrémité 24 des lamelles de raccordement 23. La constitution préférentielle de l'anneau support 20 en matériau composite permet de supprimer les patins de téflon référencés 16 et utilisés dans l'art antérieur, comme représenté sur la figure 2. De tels patins peuvent quand même être utilisés avec le joint selon l'invention sans modifier le concept de ce joint équipé des joints creux avant 22 et arrière 30.

Les glissements au niveau du deuxième point de contact sont principalement axiaux.

La présente réalisation décrite n'est qu'un exemple de mise en oeuvre du concept de joint selon l'invention, celui-ci étant conçu avec un joint avant et arrière creux pouvant éventuellement être escamotés ou déployés grâce à un gonflage commandé.

### AVANTAGES DE L'INVENTION

- Le nombre de pièces du joint selon l'invention est égal à 2 + N ; c'est-à-dire un joint avant, un anneau de support et N joints arrière (environ 10) ;
- par rapport au joint métallique décrit sur la figure 2, le joint selon l'invention a une masse environ deux fois plus faible que celui-ci, ce qui constitue un avantage considérable compte tenu de son utilisation sur un avion ;
- le nombre de pièces et sa conception font que le joint composite selon l'invention revient quatre fois moins cher que le joint métallique décrit sur la figure 2 ;
- il permet en outre un meilleur suivi et une meilleure maîtrise des déplacements des quelques pièces qui le constituent ; l'étanchéité à réaliser s'en trouve accrue.

## Revendications

1. Joint d'étanchéité entre l'extrémité arrière du fuselage d'un avion (2) et les volets extérieurs (9) de la tuyère d'un turboréacteur (5) de l'avion, fixé au turboréacteur (5) au moyen de pattes support (19) elles-mêmes fixées sur la surface externe du canal de post-combustion (6) du turboréacteur (5) et ayant deux endroits de contact différents avec la surface interne de l'arrière du fuselage de l'avion (2) dont un premier point à l'extrémité avant (21) et un troisième point de contact avec les volets extérieurs (9) à son extrémité arrière (29), caractérisé en ce qu'il est constitué de :
- un anneau support (20) sur lequel sont fixées les pattes de support (19) ;
- un joint avant (22), creux, placé à l'extrémité avant (21) et assurant à l'avant le premier contact avec la surface interne du fuselage (2) ;
- un joint arrière (30) creux, placé à l'extrémité arrière (29) et assurant à l'arrière le troisième contact avec les volets extérieurs (9), le deuxième contact avec le fuselage (2) étant assuré par un simple frottement de l'anneau support (20) sur la surface interne du fuselage (2).

2. Joint selon la revendication 1, caractérisé en ce que l'anneau support (20) est en un matériau composite et est sensiblement cylindrique.

3. Joint selon la revendication 1 ou 2, caractérisé en ce que le joint avant est en silicone.

4. Joint selon la revendication 3, caractérisé en ce que le joint avant (22) est gonflable et rétractable.

5. Joint selon l'une quelconque des revendications précédentes, caractérisé en ce que le joint arrière (30) est un joint à lèvres.

6. Joint selon l'une quelconque des revendications 1 à 4, caractérisé en ce que le joint arrière (30) est un joint gonflable extra-plat.

7. Joint selon l'une quelconque des revendications 5 ou 6, caractérisé en ce que le joint arrière (30) est coupé en un nombre N de parties égal au même nombre N de volets extérieurs (9), chaque partie coupée étant en contact avec un volet extérieur (9).

8. Joint selon l'une quelconque des revendications précédentes, caractérisé en ce que l'anneau support (20) est en carbone-époxy.

9. Joint selon l'une quelconque des revendications 1 à 7, caractérisé en ce que l'anneau support (20) est en un matériau du type carbone-bis-maléimides.

## Patentansprüche

1. Zwischen dem Ende des Rumpfes (2) eines Flugzeugs und den äußeren Klappen (9) der Düse eines Turboluftstrahltriebwerks (5) des Flugzeugs angeordnete Dichtung, die an dem Turboluftstrahltriebwerk (5) mit Hilfe von Trägerlappen (19) befestigt ist, die ihrerseits an der Außenfläche der Nachverbrennungskammer (6) des Turboluftstrahltriebwerks (5) befestigt sind, wobei die Dichtung zwei Kontaktstellen, davon eine an ihrem vorderen Ende (21), mit der Innenfläche des hinteren Teils des Flugzeugrumpfes (2) aufweist sowie an ihrem hinteren Ende (29) eine dritte Kontaktstelle mit den äußeren Klappen (9),
**gekennzeichnet durch**
einen Trägerring (20), an dem die Trägerlappen (19) befestigt sind,
eine an dem vorderen Ende (21) angeordnete vordere hohle Dichtung (22), die vorn den ersten Kontakt mit der Innenfläche des Rumpfes (2) herstellt,
eine an dem hinteren Ende (29) angeordnete hintere hohle Dichtung (30), die hinten den dritten Kontakt mit den äußeren Klappen (9) herstellt, wobei der zweite Kontakt mit dem Rumpf (2) durch eine Reibung des Trägerrings (20) auf der Innenfläche des Rumpfes (2) gewährleistet ist.

2. Dichtung nach Anspruch 1, dadurch gekennzeichnet, daß der Trägerring (20) aus einem Verbundmaterial besteht und im wesentlichen zylindrisch ist.

3. Dichtung nach Anspruch 1 oder 2, dadurch gekennzeichnet, daß die vordere Dichtung aus Silikon besteht.

4. Dichtung nach Anspruch 3. dadurch gekennzeichnet, daß die vordere Dichtung (22) aufblasbar und einziehbar ist.

5. Dichtung nach einem der vorhergehenden Ansprüche, dadurch gekennzeichnet, daß die hintere Dichtung (30) eine Lippendichtung ist.

6. Dichtung nach einem der Ansprüche 1 bis 4, dadurch gekennzeichnet, daß die hintere Dichtung (30) ein extraflache aufblasbare Dichtung ist.

7. Dichtung nach einem der Ansprüche 5 oder 6, dadurch gekennzeichnet, daß die hintere Dichtung (30) durch Schnitte in eine Zahl N von Teilen unterteilt ist, die gleich der Zahl N der äußeren Klappen (9) ist, wobei jeder geschnittene Teil mit einer der äußeren Klappen (9) in Kontakt steht.

8. Dichtung nach einem der vorhergehenden Ansprüche, dadurch gekennzeichnet, daß der Trägerring (20) aus Epoxyd-Kohlenstoff besteht.

9. Dichtung nach einem der Ansprüche 1 bis 7, dadurch gekennzeichnet, daß der Trägerring (20) aus einem Material vom Typ Kohlenstoff-bis-Maleimid besteht.

## Claims

1. Seal between the rear end of the fuselage of an aircraft (2) and the outer shutters (9) of the tailpipe of a turbojet engine (5) of the aircraft, fixed to the turbojet engine (5) by means of supporting brackets (19) themselves fixed to the outer surface of the afterburner duct (6) of the turbojet engine (5) and having two different points of contact with the inner surface of the rear of the fuselage of the aircraft (2), of which a first point is at the front end (21), and a third point of contact with the outer shutters (9) at its rear end (29), characterised in that it is made up of:
- a supporting ring (20) on which are fixed the supporting brackets (19);
- a hollow front seal (22), placed at the front end and ensuring at the front the first contact with the inner surface of the fuselage (2);
- a hollow rear seal (30), placed at the rear end (29) and ensuring at the rear the third contact with the outer shutters (9), the second contact with the fuselage (2) being provided by simple rubbing contact of the supporting ring (20) on the inner surface of the fuselage (2).

2. Seal in accordance with Claim 1, characterised in that the supporting ring (20) is in a composite material and is generally cylindrical.

3. Seal in accordance with Claims 1 or 2, characterised in that the front seal is made of silicone.

4. Seal in accordance with Claim 3, characterised in that the front seal (22) is inflatable and deflatable.

5. Seal in accordance with any of the preceding Claims, characterised in that the rear seal (30) is a leaf seal.

6. Seal in accordance with any of Claims 1 to 4, characterised in that the rear seal (30) is an extra-flat inflatable seal.

7. Seal in accordance with either of Claims 5 or 6, characterised in that the rear seal (30) is divided into a number N of parts equal to the number N of outer shutters (9), each separate part being in contact with an outer shutter (9).

8. Seal in accordance with any of the preceding Claims, characterised in that the supporting ring (20) is in carbon-epoxy.

9. Seal in accordance with any of Claims 1 to 7, characterised in that the supporting ring (20) is in a material of the carbon-bis-maleimide type.
